# EUROPÄISCHE PATENTSCHRIFT

(11) **EP 2 594 413 B1**
(45) Veröffentlichungstag und Bekanntmachung des Hinweises auf die Patenterteilung: **18.03.2015**
(21) Anmeldenummer: 11189890.4
(22) Anmeldetag: 21.11.2011
(51) Int. Cl.: B60C 1/00, B60C 11/00

(54) **Fahrzeugluftreifen**
Pneumatic tyre for a vehicle
Pneu de véhicule

(43) Veröffentlichungstag der Anmeldung: 22.05.2013
(73) Patentinhaber: Continental Reifen Deutschland GmbH, 30165 Hannover (DE)
(72) Erfinder: Volk, Heiner, 31535 Neustadt (DE); Strübel, Christian, Dr, 30559 Hannover (DE); Müller, Norbert, Dr, 29336 Nienhagen (DE)
(74) Vertreter: Finger, Karsten

(56) Entgegenhaltungen:
- FR-A1- 2 952 855
- JP-A- 2008 024 045
- US-A- 4 385 653
- US-A- 4 739 811

## Beschreibung

Die Erfindung betrifft einen Fahrzeugluftreifen für Personenkraftwagen mit einer Radialkarkasse, einem mehrlagigen Gürtel und einem Laufstreifen, welcher sich in radialer Richtung aus zwei aus unterschiedlichen Gummimischungen bestehenden Schichten, einer Laufstreifencap und einer eine zumindest im Wesentlichen konstante Stärke aufweisenden Laufstreifenbase, welche in Kontakt mit der Laufstreifencap über deren gesamte Breite verläuft, zusammensetzt, wobei die Laufstreifencap, in axialer Richtung betrachtet, aus einem zentralen Abschnitt und zwei seitlichen Abschnitte besteht.

Es ist üblich, Fahrzeugluftreifen, und zwar sowohl solche für Personenkraftwagen als auch solche für Nutzfahrzeuge, mit einem zweiteiligen Laufstreifen zu versehen, welcher aus einer Laufstreifencap, die beim Abrollen des Reifens mit dem Untergrund in Kontakt tritt, und aus einer Laufstreifenbase besteht. Die Laufstreifencap wird üblicherweise aus einer hinsichtlich des Abriebs und Nassgriff optimierten Gummimischung und die Laufstreifenbase aus einer hinsichtlich der Hysterese optimierten Gummimischung gefertigt.

Aus der US 4,385,653 ist ein Fahrzeugluftreifen bekannt, dessen Laufstreifen drei in Umfangsrichtung umlaufende Umfangsbereiche, einen zentralen Abschnitt und zwei seitliche Abschnitte, aufweist. Der zentrale Abschnitt besteht aus einer Gummimischung mit einem geringen Hystereseverlust, die seitlichen Abschnitte aus einer Gummimischung mit einem hohen Hystereseverlust. Die Gummimischung im zentralen Abschnitt soll daher eine Verbesserung des Rollwiderstands, jene in den seitlichen Abschnitten Verbesserung des Nassgriffs aufweisen. Aus der AT 376 401 B ist ein Fahrzeugluftreifen bekannt, bei welchem die Laufstreifenbase im Querschnitt trogartig ausgebildet ist und die Laufstreifencap in die Laufstreifenbase quasi eingesetzt ist. Die Laufstreifenbase erstreckt sich daher schulterseitig bis an die Oberfläche des Laufstreifens. Der Laufstreifenbase kann dadurch ein großer Anteil an Volumen der Lauffläche zugeteilt werden, wodurch sich auf den Laufstreifen die qualitativen Eigenschaften der Gummimischung der Laufstreifenbase quantitativ am stärksten auswirken können.

Aus der FR 2 952 855 A1 ist ein Fahrzeugluftreifen für Schwerlastfahrzeuge bekannt, dessen Laufstreifen im profilierten Bereich aus zwei Schichten unterschiedlicher Gummimischungen zusammengesetzt ist. Die radial äußere Schicht, die eine Dicke von 20% bis 80% der Profiltiefe aufweist, ist in einen zentralen Abschnitt und zwei seitliche Abschnitte geteilt, die aus unterschiedlichen Gummimischungen bestehen. Die Gummimischung der seitlichen Abschnitte weist einen geringeren dynamischen Elastizitätsmodul und eine höhere Rückprallelastizität auf als der zentrale, mittlere Abschnitt. Die JP 2008 024 045 A betrifft einen Fahrzeugluftreifen mit einem Laufstreifen, der eine Basisschicht aufweist, die gleichzeitig seitliche Abschnitte des Laufstreifens bildet. Diese Basisschicht verläuft daher als dünne Schicht radial innerhalb eines mittleren Abschnittes des Laufstreifens. Die Basisschicht und damit auch die beiden seitlichen Abschnitte bestehen aus einer Gummimischung mit einem geringeren dynamischen Elastizitätsmodul und einer höheren Rückprallelastizität als der mittlere Abschnitt des Laufstreifens.

Bei der Entwicklung von Laufstreifenmischungen steht unter anderem im Vordergrund, einen niedrigen Rollwiderstand bei gleichzeitig guten Nassgriffeigenschaften und hoher Schräglaufsteifigkeit zu erreichen. Der Rollwiderstand korreliert mit der Rückprallelastizität bei 70°C (gemäß DIN 53512) der Gummimischung des Laufstreifens, wobei eine hohe Rückprallelastizität einen niedrigen Rollwiderstand zur Folge hat. Die Schräglaufsteifigkeit variiert mit der dynamischen Steifigkeit E' der Laufstreifenmischung bei 55°C (gemäß DIN 53513), wobei ein relativ hoher Wert auch eine hohe Schräglaufsteifigkeit bedeutet. Eine Gummimischung mit einem hohen E'-Wert hat meist eine niedrige Rückprallelastizität. Verwendet man nun nur eine einzige Gummimischung in der Laufstreifencap, kann man diese Eigenschaften gegeneinander lediglich verschieben zu besserem oder schlechterem Rollwiderstand bzw. zu geringerer oder höherer Schräglaufsteifigkeit.

Der Erfindung liegt die Aufgabe zugrunde, bei einem Reifen der eingangs genannten Art, diesen Zielkonflikt zwischen den Eigenschaften niedriger Rollwiderstand bei gleichzeitig hoher Schräglaufsteifigkeit möglichst gut zu lösen.

Die gestellte Aufgabe wird erfindungsgemäß dadurch gelöst, dass die beiden seitlichen Abschnitte aus einer Gummimischung bestehen, die einen geringeren dynamischen Elastizitätsmodul E' und bei 55°C gemäß DIN 53513 (bei 8 % Dehnung) und eine höhere Rückprallelastizität bei 70°C gemäß DIN 53512 aufweist als der zentrale Abschnitt der Laufstreifencap, wobei der dynamische Elastizitätsmodul E' bei 55°C gemäß DIN 53513 (bei 8 % Dehnung) der Gummimischung des zentralen Abschnittes zwischen 3,9 N/mm² und 8,1 N/mm² und der dynamische Elastizitätsmodul E' bei 55°C gemäß DIN 53513 (bei 8 % Dehnung) der Gummimischung der beiden seitlichen Abschnitte zwischen 2,0 N/mm² und 6,4 N/mm² beträgt.

Der Erfindung liegen die Erkenntnisse zugrunde, dass etwa zwei Drittel des Rollwiderstandes des Laufstreifens eines Reifens in den Reifenschulterbereichen erzeugt werden und nur etwa ein Drittel in der Reifenmitte und dass der größte Anteil an Schräglaufsteifigkeit in der Reifenmitte übertragen wird. Es ist daher von Vorteil, wenn gemäß der Erfindung in der Reifenmitte, im zentralen Abschnitt des Laufstreifens, eine Gummimischung verwendet wird, die ein hohes E' und somit eine hohe Schräglaufsteifigkeit gewährleistet und in den seitlichen Abschnitten eine Gummimischung eingesetzt wird, die eine hohe Rückprallelastizität, und somit einen niedrigen Rollwiderstand besitzt. Ein erfindungsgemäß ausgeführter Reifen hat eine höhere Schräglaufsteifigkeit, die vorwiegend im zentralen Abschnitt des Laufstreifens generiert wird, und einen niedrigeren Rollwiderstand durch die höhere Rückprallelastizität des Gummis in den seitlichen Abschnitten des Laufstreifens.

Um ausgewogene und gute Ergebnisse hinsichtlich niedrigerem Rollwiderstand und besserer Schräglaufsteifigkeit zu erhalten, kann der zentrale Abschnitt je nach Reifenbreite, eine Breite zwischen 20 % und 80 % der Bodenaufstandsflächenbreite aufweisen. Bei breiten Reifen ist der zentrale Abschnitt verhältnismäßig breiter ist als bei schmäleren Reifen, die Breite der beiden seitlichen Abschnitte ist weitgehend unabhängig von der Reifenbreite und vorzugsweise bei breiteren und schmäleren Reifen etwa gleich groß.

Um den größten Effekt hinsichtlich geringerem Rollwiderstand und besserer Schräglaufsteifigkeit zu erzielen ohne andere Laufstreifeneigenschaften, wie die Abriebsbeständigkeit, negativ zu beeinflussen, ist es vorteilhaft, die Gummimischungen für den zentralen Abschnitt und die beiden seitlichen Abschnitte hinsichtlich des dynamischen Elastizitätsmoduls E' der Mischungen und der Rückprallelastizität entsprechend auszulegen.

Gemäß einer diesbezüglichen vorteilhaften Weiterentwicklung der Erfindung beträgt der dynamische Elastizitätsmodul E' bei 55°C gemäß DIN 53513 (bei 8 % Dehnung) der Gummimischung der beiden seitlichen Abschnitte zwischen 30 % und 90 %, insbesondere zwischen 40 % und 80 %, des dynamischen Elastizitätsmoduls E' bei 55 °C gemäß DIN 53513 (bei 8 % Dehnung) der Gummimischung des zentralen Abschnittes der Laufstreifencap.

Insbesondere sollte gemäß der Erfindung der dynamische Elastizitätsmodul E' bei 55 °C gemäß DIN 53513 (bei 8 % Dehnung) der Gummimischung der beiden seitlichen Abschnitte zwischen 3,0 N/mm² und 5,6 N/mm² betragen.

Die Gummimischung des zentralen Abschnittes sollte bevorzugt einen dynamischen Elastizitätsmodul E' bei 55 °C gemäß DIN 53513 (bei 8 % Dehnung) aufweisen, der zwischen 5,2 N/mm² und 7,7 N/mm², beträgt. Gerade in diesen Bereichen wird eine hohe Schräglaufsteifigkeit des Fahrzeugluftreifens gewährleistet.

Um den Rollwiderstand erfindungsgemäß möglichst niedrig zu halten, ist es von Vorteil, wenn die Gummimischung in den beiden seitlichen Abschnitten eine Rückprallelastizität bei 70°C gemäß DIN 53512 aufweist, welche zwischen 40 % und 90 %, insbesondere zwischen 50 % und 80 %, beträgt. Die Gummimischung des zentralen Abschnittes sollte eine Rückprallelastizität bei 70°C gemäß DIN 53512 aufweisen, welche zwischen 20 % und 90 % geringer ist als die Rückprallelastizität bei 70°C gemäß DIN 53512 der beiden seitlichen Abschnitte der Laufstreifencap.

Die Gummimischung des zentralen Abschnittes, welche hinsichtlich der Schräglaufsteifigkeit des Reifens optimiert ist, weist eine Rückprallelastizität bei 70°C gemäß DIN 53512 auf, welche zwischen 15 % und 70 %, insbesondere zwischen 20 % und 60 %, beträgt.

Weitere Merkmale, Vorteile und Einzelheiten der Erfindung werden nun anhand der Zeichnung, die Ausführungsbeispiele darstellt, und anhand der Tabellen näher erläutert. Dabei zeigen
Fig. 1 und Fig. 2 jeweils schematisch einen Querschnitt durch den Laufstreifenbereich eines erfindungsgemäßen Fahrzeugluftreifens und
Fig. 3 ein Diagramm, welches die mit der Erfindung erzielbaren Verbesserungen des Rollwiderstandes und der Schräglaufsteifigkeit verdeutlicht.

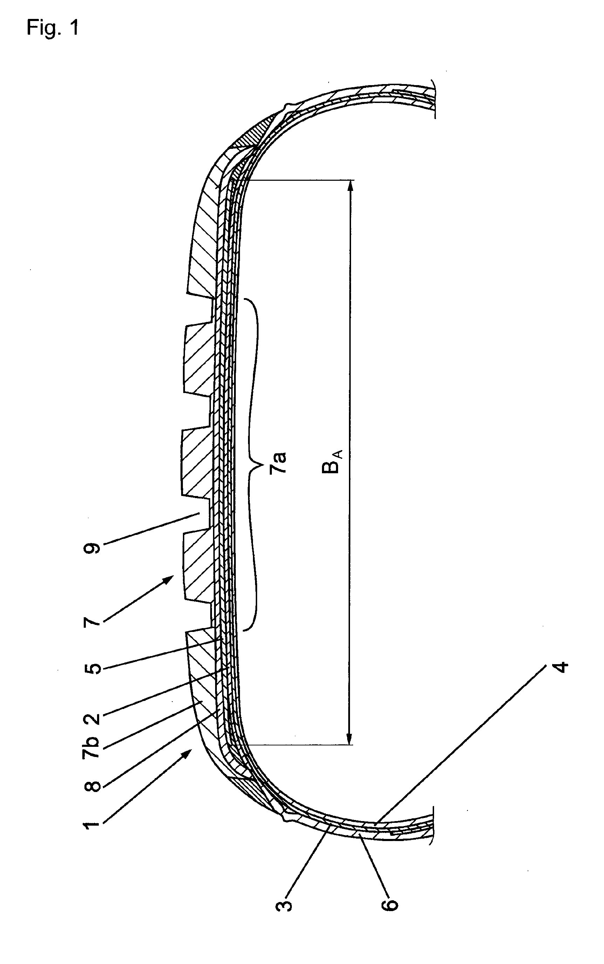

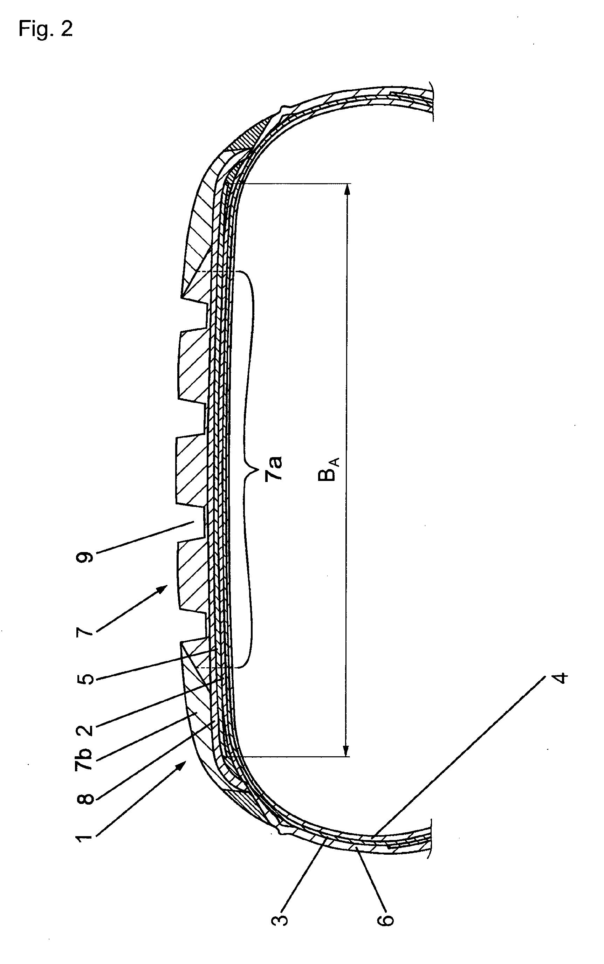

Ein erfindungsgemäß ausgeführter Fahrzeugluftreifen kann sowohl ein PKW-Reifen als auch ein Nutzfahrzeugreifen sein. Fig. 1 und Fig. 2 zeigen von den üblichen Bauteilen eines PKW-Reifens einen Laufstreifen 1, einen Gürtel 2 mit insbesondere zwei Gürtellagen aus in Gummi eingebetteten, vorzugsweise aus Stahlkord bestehenden Festigkeitsträgern, einer ebenfalls mit Festigkeitsträgern verstärkten Radialkarkasse 3 und einer luftdichten Innenschicht 4. Der Gürtel 2 ist von einer sogenannten Gürtelbandage 5 aus gummierten textilen Festigkeitsträgern abgedeckt. Von den Seitenwänden 6 sind lediglich die axial äußeren Endabschnitte dargestellt. Nicht gezeigt sind die Wulstbereiche mit Wulstkernen, Kernprofilen und den weiteren gegebenenfalls in den Wulstbereichen vorgesehenen Verstärkungslagen und dergleichen.

Der Laufstreifen 1 besteht aus einer radial äußeren Gummischicht, der Laufstreifencap 7 und einer radial inneren Gummischicht, der Laufstreifenbase 8. Unterhalb der Laufstreifenbase 8 kann eine nicht dargestellte Unterplatte eingebaut sein. Die Laufstreifenbase 8 weist eine im Wesentlichen konstante Stärke von ca. 2 mm auf. Die Laufstreifencap 7 ist in axialer Richtung dreigeteilt, sodass sie aus einem zentralen Abschnitt 7a und zwei seitlichen Abschnitten 7b besteht. Der zentrale Abschnitt 7a erstreckt sich mit konstanter axialer Breite vorzugsweise zentrisch zur Reifenmitte über 20 % bis 80 % der Breite B_{A} des Laufstreifens in der Bodenaufstandsfläche, ermittelt bei auf einer Felge montierten und unter Nenndruck und Nennlast gesetzten Reifen (gemäß ETRTO-Standards). Bei breiten Reifen ist der zentrale Abschnitt 7a verhältnismäßig breiter, bis zu 80 %, bei schmaleren Reifen verhältnismäßig geringer. Die Breite der beiden seitlichen Abschnitte 7b ist weitgehend unabhängig von der Reifenbreite, bei der dargestellten Ausführungsform sind die seitlichen Abschnitte 7b ferner gleich breit und symmetrisch zur Reifenmitte angeordnet. Möglich ist auch ein seitlicher Versatz des zentralen Abschnittes 7a gegenüber der Reifenmitte, sodass die beiden seitlichen Abschnitte 7b unterschiedliche Breiten aufweisen, wobei jener seitliche Abschnitt 7b, welcher die geringere Breite aufweist, eine Breite von mindestens 10 % der Bodenaufstandsflächenbreite B_{A} aufweisen sollte. Wie Fig. 1 und Fig. 2 ferner zeigen, ist der Laufstreifen profiliert, dargestellt sind vier in Umfangsrichtung umlaufende Umfangsnuten 9, die den Laufstreifen in in Umfangsrichtung umlaufende Laufstreifenbänder oder Blockreihen gliedern. Bei der in Fig. 1 gezeigten Ausführungsform verlaufen die Grenzen zwischen den seitlichen Abschnitten 7b und dem zentralen Abschnitt 7a entlang der äußeren Flanken der axial am weitesten außen gelegenen Umfangsnuten 9. Es sind jedoch auch andere Übergänge zwischen den seitlichen Abschnitten 7b und dem zentralen Abschnitt 7a möglich, beispielsweise durch eine Ausführung mit in axialer Richtung überlappenden Bereichen des zentralen Abschnittes 7a und der seitlichen Abschnitte 7b. Vorzugsweise überlappen dabei die seitlichen Abschnitte 7b den zentrale Abschnitt 7a, wie es in Fig. 2 gezeigt ist. Die erwähnten Breiten des zentralen Abschnittes 7a und der seitlichen Abschnitte 7b werden in diesem Fall auf jene Stellen in den überlappenden Bereichen bezogen, wo die beiden Abschnitte 7a, 7b gleich dick sind.

Gemäß der Erfindung bestehen die beiden seitlichen Abschnitte 7b der Laufstreifencap 7 aus einer Gummimischung mit einer Rückprallelastizität bei 70°C gemäß DIN 53512, die größer ist als jene der Gummimischung des zentralen Abschnittes 7a. Darüber hinaus weist die Mischung der seitlichen Abschnitte 7b einen geringeren dynamischen Elastizitätsmodul E' bei 55°C gemäß DIN 53513 (bei 8 % Dehnung) auf als die Gummimischung des zentralen Abschnittes 7a.

Die Tabelle 1 zeigt das Ergebnis von FEM-Berechnungen für jeweils gleiche Mischungen A, B, C, D, E in den Abschnitten 7a und 7b der Laufstreifencap 7. Die Ergebnisse der Mischung C wurden 100 % gesetzt. Die Prozentzahlen stellen die berechneten Reifeneigenschaften dar, höhere Prozentwerte bedeuten, dass die jeweilige Eigenschaft verbessert wurde. Somit hat ein Reifen mit einem niedrigeren Rollwiderstand einen höheren Prozentwert. Für die Berechnungen wurden die Materialdaten aus den Labortests der Mischungen verwendet. Tabelle 2 enthält für die Mischungen aus Tabelle 1 die im Labor gemessenen Werte für die Rückprallelastizität in % und den Elastizitätmodul E' in N/mm².

**Tabelle 1**

| Mischung des Abschnitts 7a | Mischung der Abschnitte 7b | Rollwiderstand | Schräglaufsteifigkeit |
|---|---|---|---|
| A | A | 73.7 % | 105.4 % |
| B | B | 80.0 % | 102.7 % |
| C | c | 100.0 % | 100.0 % |
| D | D | 110.8 % | 97.8 % |
| E | E | 114.9 % | 79.7 % |

**Tabelle 2**

| Mischungen | Rückprallelastizität bei 70°C [%] | E' bei 55°C und 8 % Dehnung [N/mm²] |
|---|---|---|
| A | 27 | 7.3 |
| B | 35 | 6.4 |
| C | 50 | 5.8 |
| D | 57 | 5.4 |
| E | 69 | 3.2 |

Tabelle 3 zeigt die Ergebnisse von FEM-Berechnungen mit unterschiedlichen Mischungen in den seitlichen Abschnitten 7b und im zentralen Abschnitt 7a, wobei hier die obigen Mischungen A, B, C, D, E in unterschiedlicher Kombination herangezogen wurden.

**Tabelle 3**

| Mischung des Abschnitts 7a | Mischung der Abschnitte 7b | Rollwiderstand | Schräglaufsteifigkeit |
|---|---|---|---|
| B | E | 114.8 % | 96.0 % |
| A | D | 98.8 % | 103.4 % |
| C | E | 121.7 % | 93.9 % |

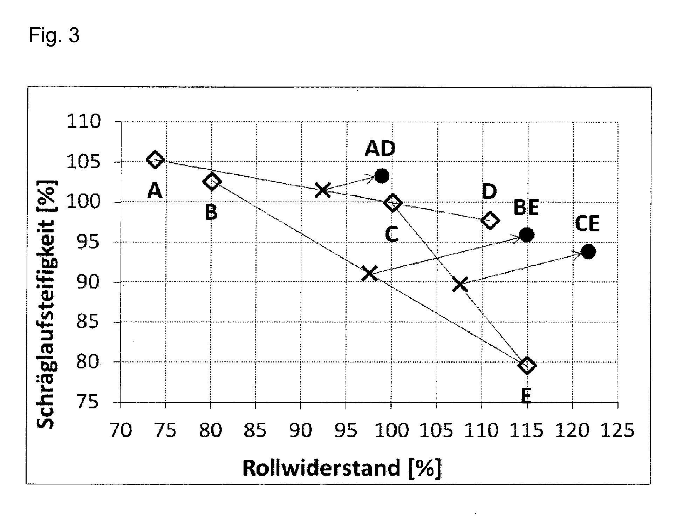

Die Ergebnisse aus Tabelle 1 und Tabelle 3 sind in Fig. 3 verdeutlicht. Die Buchstaben in Fig. 3 kennzeichnen die Punkte, die zu den Ergebnissen aus Tabelle 1 und Tabelle 3 gehören. So bezeichnet "A" die Berechnungen mit der Mischung A für die Abschnitte 7a und 7b, "AD" die Berechnungen mit der Mischung A im Abschnitt 7a und Mischung D in den Abschnitten 7b. Die Verbindungslinien der Kombinationen A und D, B und E sowie C und E wurden zusätzlich eingezeichnet. Wenn die Volumenanteile der Mischungen der Abschnitte 7a und 7b in etwa gleich groß sind, liegt eine lineare Mittelung der Reifeneigenschaften nahe. Für die drei Kombinationen aus Tabelle 3 wurden die Mittelwerte berechnet und als Kreuze in Fig. 3 eingetragen, die sich daher in der Mitte der jeweiligen Verbindungslinie befinden. Durch die Erfindung mit unterschiedlichen Mischungen in den Abschnitten 7a und 7b wird aber ein deutlich besseres Ergebnis erzielt als durch eine reine Mittelung (angedeutet durch die Pfeile von der Position der Mittelwerte zu den Positionen der Kombinationen). In allen Fällen wurden sowohl der Rollwiderstand als auch die Schräglaufsteifigkeit deutlich verbessert.

Besonders vorteilhaft ist es, wenn die Gummimischung in den seitlichen Abschnitten einen Elastizitätsmodul E' bei 55°C (gemäß DIN 53513, bei 8 % Dehnung) aufweist, welcher 2,0 N/mm² bis 6,4 N/mm², insbesondere 3,0 N/mm² bis 5,6 N/mm² beträgt. Die Gummimischung im zentralen Abschnitt weist einen Elastizitätsmodul E' auf, welcher 3,9 N/mm² bis 8,1 N/mm², insbesondere 5,2 N/mm² bis 7,7 N/mm², beträgt. Die Rückprallelastizität bei 70°C (gemäß DIN 53512) der Gummimischung in den seitlichen Abschnitten beträgt 40 % bis 90 %, insbesondere 50 % bis 80 %, die Rückprallelastizität der Gummimischung des zentralen Abschnittes beträgt 15 % bis 70 %, insbesondere 20 % bis 60 %.

Beispiele für typische Kautschukmischungen für den zentralen Abschnitt 7a und für die seitlichen Abschnitte 7b der Laufstreifencap sind Tabelle 4 zu entnehmen. Die Anteile der Mischungsbestandteile sind in phr angegeben. Der SSBR1 ist ein Kautschuk mit einer Glasübergangstemperatur Tg zwischen -25 °C und -30 °C, der SSBR2 ist ein Kautschuk mit einer Glasübergangstemperatur Tg zwischen -17 °C und -24 °C.

**Tabelle 4**

| Bestandteile | Mischung B | Mischung E | Mischung C |
|---|---|---|---|
| NR | 15 | 15 | 15 |
| SSBR 1 | 85 | | |
| SSBR 2 | | 85 | 85 |
| Ruß | 14 | 14 | 14 |
| Kieselsäure | 96 | 40 | 95 |
| Silan | 8 | 3 | 7 |
| Klebharz | 14 | 7 | 12 |
| DPG Beschleuniger | 2 | 1,5 | 2 |
| CBS Beschleuniger | 2 | 2 | 2 |
| Schwefel | 1,7 | 1,7 | 1,7 |

### Bezugsziffernliste

- 1: Laufstreifen
- 2: Gürtel
- 3: Radialkarkasse
- 4: Innenschicht
- 5: Gürtelbandage
- 6: Seitenwände
- 7: Laufstreifencap
- 7a: zentraler Abschnitt
- 7b: seitliche Abschnitte
- 8: Laufstreifenbase
- 9: Umfangsnuten
- B_{A}: Bodenaufstandsflächenbreite

## Patentansprüche

1. Fahrzeugluftreifen für Personenkraftwagen mit einer Radialkarkasse, einem mehrlagigen Gürtel (2) und einem Laufstreifen (1), welcher sich in radialer Richtung aus zwei aus unterschiedlichen Gummimischungen bestehenden Schichten, einer Laufstreifencap (7) und einer eine zumindest im Wesentlichen konstante Stärke aufweisenden Laufstreifenbase (8), welche in Kontakt mit der Laufstreifencap (7) über deren gesamte Breite verläuft, zusammensetzt, wobei die Laufstreifencap (7), in axialer Richtung betrachtet, aus einem zentralen Abschnitt (7a) und zwei seitlichen Abschnitte (7b) besteht,
**dadurch gekennzeichnet,**
**dass** die beiden seitlichen Abschnitte (7b) aus einer Gummimischung bestehen, die einen geringeren dynamischen Elastizitätsmodul E' und bei 55°C gemäß DIN 53513 (bei 8 % Dehnung) und eine höhere Rückprallelastizität bei 70°C gemäß DIN 53512 aufweist als der zentrale Abschnitt (7a) der Laufstreifencap (7), wobei der dynamische Elastizitätsmodul E' bei 55°C gemäß DIN 53513 (bei 8 % Dehnung) der Gummimischung des zentralen Abschnittes (7a) zwischen 3,9 N/mm² und 8,1 N/mm² und der dynamische Elastizitätsmodul E' bei 55°C gemäß DIN 53513 (bei 8 % Dehnung) der Gummimischung der beiden seitlichen Abschnitte (7b) zwischen 2,0 N/mm² und 6,4 N/mm² beträgt.

2. Fahrzeugluftreifen nach Anspruch 1, **dadurch gekennzeichnet, dass** der zentrale Abschnitt (7a) und die seitlichen Abschnitte (7b) in axialer Richtung einander überlappende Bereiche aufweisen.

3. Fahrzeugluftreifen nach Anspruch 2, **dadurch gekennzeichnet, dass** die seitlichen Abschnitte (7b) den mittleren Abschnitt (7a) überlappen.

4. Fahrzeugluftreifen nach einem der Ansprüche 1 bis 3, **dadurch gekennzeichnet, dass** die Breite des zentralen Abschnittes (7a) zwischen 20 % und 80 % der Bodenaufstandsflächenbreite des Laufstreifens beträgt.

5. Fahrzeugluftreifen nach einem der Ansprüche 1 bis 4, **dadurch gekennzeichnet, dass** sich die Breiten der beiden seitlichen Abschnitte (7b) um bis zu 50 % voneinander unterscheiden.

6. Fahrzeugluftreifen nach einem der Ansprüche 1 bis 4, **dadurch gekennzeichnet, dass** die Breiten der beiden seitlichen Abschnitte (7b) zumindest im Wesentlichen übereinstimmen.

7. Fahrzeugluftreifen nach einem der Ansprüche 1 bis 6, **dadurch gekennzeichnet, dass** der dynamische Elastizitätsmodul E' bei 55°C gemäß DIN 53513 (bei 8 % Dehnung) der Gummimischung der beiden seitlichen Abschnitte (7b) zwischen 30 % und 90 %, insbesondere zwischen 40 % und 80 %, des dynamischen Elastizitätsmoduls E' bei 55°C gemäß DIN 53513 (bei 8 % Dehnung) der Gummimischung des zentralen Abschnittes (7a) der Laufstreifencap (7) beträgt.

8. Fahrzeugluftreifen nach einem der Ansprüche 1 bis 7, **dadurch gekennzeichnet, dass** der dynamische Elastizitätsmodul E' bei 55°C gemäß DIN 53513 (bei 8 % Dehnung) der Gummimischung der beiden seitlichen Abschnitte (7b) zwischen 3,0 N/mm² und 5,6 N/mm², beträgt.

9. Fahrzeugluftreifen nach einem der Ansprüche 1 bis 8, **dadurch gekennzeichnet, dass** der dynamische Elastizitätsmodul E' bei 55°C gemäß DIN 53513 (bei 8 % Dehnung) der Gummimischung des zentralen Abschnittes (7a) zwischen 5,2 N/mm² und 7,7 N/mm², beträgt.

10. Fahrzeugluftreifen nach einem der Ansprüche 1 bis 9, **dadurch gekennzeichnet, dass** die Gummimischung des zentralen Abschnittes (7a) eine Rückprallelastizität bei 70°C gemäß DIN 53512 aufweist, welche zwischen 20 % und 90 % kleiner ist als die Rückprallelastizität bei 70 °C gemäß DIN 53512 der seitlichen Abschnitte (7b) der Laufstreifencap (7).

11. Fahrzeugluftreifen nach Anspruch 10, **dadurch gekennzeichnet, dass** die Rückprallelastizität bei 70 °C gemäß DIN 53512 der Gummimischung der beiden seitlichen Abschnitte (7b) zwischen 40 % und 90 %, insbesondere zwischen 50 % und 80 %, beträgt.

12. Fahrzeugluftreifen nach Anspruch 10, **dadurch gekennzeichnet, dass** die Gummimischung des zentralen Abschnittes (7a) eine Rückprallelastizität bei 70°C gemäß DIN 53512 aufweist, welche zwischen 15 % und 70 %, insbesondere zwischen 20 % und 60 %, beträgt.

## Claims

1. Pneumatic vehicle tyre for passenger cars with a radial carcass, a multiply breaker belt (2) and a tread rubber (1), which is made up in the radial direction of two layers consisting of different rubber compounds, a tread cap (7) and a tread base (8), which has an at least substantially constant thickness and extends in contact with the tread cap (7) over the entire width thereof, the tread cap (7), considered in the axial direction, consisting of a central portion (7a) and two lateral portions (7b),
**characterized**
**in that** the two lateral portions (7b) consist of a rubber compound that has a lower dynamic modulus of elasticity E' at 55°C according to DIN 53513 (under 8% elongation) and a higher rebound resilience at 70°C according to DIN 53512 than the central portion (7a) of the tread cap (7), wherein the dynamic modulus of elasticity E' at 55°C according to DIN 53513 (under 8% elongation) of the rubber compound of the central portion (7a) is between 3.9 N/mm² and 8.1 N/mm² and the dynamic modulus of elasticity E' at 55°C according to DIN 53513 (under 8% elongation) of the rubber compound of the two lateral portions (7b) is between 2.0 N/mm² and 6.4 N/mm².

2. Pneumatic vehicle tyre according to Claim 1, **characterized in that** the central portion (7a) and the lateral portions (7b) have regions that overlap one another in the axial direction.

3. Pneumatic vehicle tyre according to Claim 2, **characterized in that** the lateral portions (7b) overlap the central portion (7a).

4. Pneumatic vehicle tyre according to one of Claims 1 to 3, **characterized in that** the width of the central portion (7a) is between 20% and 80% of the width of the ground contact area of the tread rubber.

5. Pneumatic vehicle tyre according to one of Claims 1 to 4, **characterized in that** the widths of the two lateral portions (7b) differ from one another by up to 50%.

6. Pneumatic vehicle tyre according to one of Claims 1 to 4, **characterized in that** the widths of the two lateral portions (7b) coincide at least substantially.

7. Pneumatic vehicle tyre according to one of Claims 1 to 6, **characterized in that** the dynamic modulus of elasticity E' at 55°C according to DIN 53513 (under 8% elongation) of the rubber compound of the two lateral portions (7b) is between 30% and 90%, in particular between 40% and 80%, of the dynamic modulus of elasticity E' at 55°C according to DIN 53513 (under 8% elongation) of the rubber compound of the central portion (7a) of the tread cap (7).

8. Pneumatic vehicle tyre according to one of Claims 1 to 7, **characterized in that** the dynamic modulus of elasticity E' at 55°C according to DIN 53513 (under 8% elongation) of the rubber compound of the two lateral portions (7b) is between 3.0 N/mm² and 5.6 N/mm².

9. Pneumatic vehicle tyre according to one of Claims 1 to 8, **characterized in that** the dynamic modulus of elasticity E' at 55°C according to DIN 53513 (under 8% elongation) of the rubber compound of the central portion (7a) is between 5.2 N/mm² and 7.7 N/mm².

10. Pneumatic vehicle tyre according to one of Claims 1 to 9, **characterized in that** the rubber compound of the central portion (7a) has a rebound resilience at 70°C according to DIN 53512 that is between 20% and 90% less than the rebound resilience at 70°C according to DIN 53512 of the lateral portions (7b) of the tread cap (7).

11. Pneumatic vehicle tyre according to Claim 10, **characterized in that** the rebound resilience at 70°C according to DIN 53512 of the rubber compound of the two lateral portions (7b) is between 40% and 90%, in particular between 50% and 80%.

12. Pneumatic vehicle tyre according to Claim 10, **characterized in that** the rubber compound of the central portion (7a) has a rebound resilience at 70°C according to DIN 53512 that is between 15% and 70%, in particular between 20% and 60%.

## Revendications

1. Pneu de véhicule pour véhicules légers, comprenant une carcasse radiale, une ceinture multicouche (2) et une bande de roulement (1), qui se compose, dans la direction radiale, de deux couches constituées de mélanges de caoutchouc différents, d'une tête de bande de roulement (7) et d'une base de bande de roulement (8) présentant au moins essentiellement une épaisseur constante, qui s'étend en contact avec la tête de bande de roulement (7) sur toute sa largeur, la tête de bande de roulement (7), considérée dans la direction axiale, se composant d'une portion centrale (7a) et de deux portions latérales (7b),
**caractérisé en ce que**
les deux portions latérales (7b) se composent d'un mélange de caoutchouc qui présente un plus faible module d'élasticité dynamique E' à 55°C selon la norme DIN 53513 (à 8 % d'allongement) et une plus grande élasticité au rebond à 70°C selon DIN 53512 que la portion centrale (7a) de la tête de bande de roulement (7), le module d'élasticité dynamique E' à 55°C selon la norme DIN 53513 (à 8 % d'allongement) du mélange de caoutchouc de la portion centrale (7a) étant compris entre 3,9 N/mm² et 8,1 N/mm² et le module d'élasticité dynamique E' à 55°C selon DIN 53513 (à 8 % d'allongement) du mélange de caoutchouc des deux portions latérales (7b) étant compris entre 2,0 N/mm² et 6,4 N/mm².

2. Pneu de véhicule selon la revendication 1, **caractérisé en ce que** la portion centrale (7a) et les portions latérales (7b) présentent des régions se chevauchant mutuellement dans la direction axiale.

3. Pneu de véhicule selon la revendication 2, **caractérisé en ce que** les portions latérales (7b) chevauchent la portion centrale (7a).

4. Pneu de véhicule selon l'une quelconque des revendications 1 à 3, **caractérisé en ce que** la largeur de la portion centrale (7a) est comprise entre 20 % et 80 % de la largeur de la surface d'appui au sol de la bande de roulement.

5. Pneu de véhicule selon l'une quelconque des revendications 1 à 4, **caractérisé en ce que** les largeurs des deux portions latérales (7b) se distinguent l'une de l'autre de jusqu'à 50 %.

6. Pneu de véhicule selon l'une quelconque des revendications 1 à 4, **caractérisé en ce que** les largeurs des deux portions latérales (7b) coïncident au moins essentiellement.

7. Pneu de véhicule selon l'une quelconque des revendications 1 à 6, **caractérisé en ce que** le module d'élasticité dynamique E' à 55°C selon DIN 53513 (à 8 % d'allongement) du mélange de caoutchouc des deux portions latérales (7b) est compris entre 30 % et 90 %, en particulier entre 40 % et 80 %, du module d'élasticité dynamique E' à 55°C selon DIN 53513 (à 8 % d'allongement) du mélange de caoutchouc de la portion centrale (7a) de la tête de bande de roulement (7).

8. Pneu de véhicule selon l'une quelconque des revendications 1 à 7, **caractérisé en ce que** le module d'élasticité dynamique E' à 55°C selon DIN 53513 (à 8 % d'allongement) du mélange de caoutchouc des deux portions latérales (7b) est compris entre 3,0 N/mm² et 5,6 N/mm².

9. Pneu de véhicule selon l'une quelconque des revendications 1 à 8, **caractérisé en ce que** le module d'élasticité dynamique E' à 55°C selon DIN 53513 (à 8 % d'allongement) du mélange de caoutchouc de la portion centrale (7a) est compris entre 5,2 N/mm² et 7,7 N/mm².

10. Pneu de véhicule selon l'une quelconque des revendications 1 à 9, **caractérisé en ce que** le mélange de caoutchouc de la portion centrale (7a) présente une élasticité au rebond à 70°C selon DIN 53512 qui est inférieure de 20 % à 90 % à l'élasticité au rebond à 70°C selon DIN 53512 des portions latérales (7b) de la tête de bande de roulement (7).

11. Pneu de véhicule selon la revendication 10, **caractérisé en ce que** l'élasticité au rebond à 70°C selon DIN 53512 du mélange de caoutchouc des deux portions latérales (7b) est comprise entre 40 % et 90 %, en particulier entre 50 % et 80 %.

12. Pneu de véhicule selon la revendication 10, **caractérisé en ce que** le mélange de caoutchouc de la portion centrale (7a) présente une élasticité au rebond à 70°C selon DIN 53512 qui est comprise entre 15 % et 70 %, en particulier entre 20 % et 60 %.
